# FASCICULE DE BREVET EUROPEEN

(11) **EP 2 947 550 B1**
(45) Date de publication et mention de la délivrance du brevet: **15.01.2020**
(21) Numéro de dépôt: 15168794.4
(22) Date de dépôt: 22.05.2015
(51) Int. Cl.: G06F 3/01, G06F 3/03

(54) **PROCÉDÉ DE COMMANDE PAR RECONNAISSANCE GESTUELLE**
VERFAHREN ZUR GESTENERKENNUNG
GESTURE RECOGNITION-BASED CONTROL METHOD

(30) Priorité: 22.05.2014 FR 1401168
(43) Date de publication de la demande: 25.11.2015
(73) Titulaire: Valeo Comfort and Driving Assistance, 94046 Créteil Cedex (FR)
(72) Inventeur: Blain, Frédéric, 94046 Créteil Cedex (FR)

(56) Documents cités:
- EP-A1- 2 219 097
- US-A1- 2013 063 336
- US-A1- 2013 307 768
- US-A1- 2014 053 115

## Description

L'invention concerne un procédé de commande à reconnaissance gestuelle pour un système informatique.

Dans le domaine des systèmes de commande informatiques munis d'écrans, on connaît les périphériques de type souris, qui permettent d'interagir avec des éléments affichés sur l'écran. Au moins deux propriétés sont communes à tous ces périphériques, une position exprimée dans un système cartésien et un état, cliqué ou relâché, commandant une action sur les éléments affichés. Chaque changement d'état est associé à une position, afin de déterminer la localisation sur l'écran de l'action induite par le changement d'état.

Les périphériques de type souris regroupent de nombreuses solutions, parmi lesquelles, les souris d'ordinateur classiques, les écrans tactiles et les systèmes de commande à reconnaissance gestuelle.

Un système de commande à reconnaissance gestuelle est en général muni d'une unité de calcul, d'une caméra et d'un logiciel afin de reconnaître, par exemple, la position de la main et les gestes effectués par cette main. Il est ainsi possible d'utiliser un tel système afin de simuler une souris et de contrôler une interface utilisateur.

Dans de tels systèmes, la position de la souris est généralement déterminée en fonction de la position de la main. Ces systèmes comportent souvent une indication permettant à l'utilisateur de connaître la position de la souris, par exemple par l'affichage d'un curseur sur l'écran.

Les changements d'états de cette souris peuvent être accomplis par le biais de gestes. Dans ce cas, le système identifie un geste particulier comme étant un premier changement d'état, par exemple de cliqué à relâché, et un autre geste comme étant un second changement d'état, par exemple de relâché à cliqué.

Le processus de reconnaissance des gestes et le processus de détermination d'une position de la souris sont généralement deux processus indépendants. Ainsi, le processus de détermination d'une position de la souris n'est fonction que de la position de la main dans l'espace, ce qui a pour conséquence lorsque l'utilisateur effectue un geste afin de changer l'état de la souris, de venir perturber la position de cette dernière. Tout geste entraine donc nécessairement un déplacement de la main, une nouvelle position de la souris étant alors déterminée. Ainsi, le système n'associe pas le changement d'état à la position exacte souhaitée par l'utilisateur, mais à la position de sa main durant le geste. Par conséquent, le système n'effectue pas l'action désirée au bon endroit et risque, par exemple, de ne pas sélectionner le bon élément sur l'écran.

Certains systèmes ont essayé de résoudre ce problème en proposant une méthode consistant, pour sélectionner un élément représenté sur un écran, à imposer à l'utilisateur de maintenir sa main au dessus de l'élément pendant un certain temps. Cependant, ceci entraine une contrainte pour l'utilisateur qui doit maintenir sa main en position stable pendant environ une seconde, contrainte qui est plus ou moins bien réalisée par l'utilisateur, et entraine de plus une lenteur de réaction du système puisque la sélection d'un objet nécessite un certain temps d'acquisition.

D'autres systèmes sont aussi connus, comme:
- US 2014/053115 A1 concernant un système et un procédé de reconnaissance des gestes de la main permettant de contrôler un dispositif basé sur la vision par ordinateur. Une commande de clic gauche de la souris est générée par un mouvement du pouce par rapport à d'autres parties de la main. Afin d'éviter de déplacer involontairement le curseur avec un geste de la main, lors de la détection d'un geste, le système peut automatiquement ramener le curseur à sa position avant le début du geste.
- US 2013/307768 A1 concernant un dispositif d'affichage qui est configuré pour permettre une manipulation stable à l'aide de gestes en fixant l'emplacement d'un point de référence même lorsque la forme d'un objet est modifiée pour effectuer des gestes, ainsi que son procédé de commande.

L'invention a pour but de résoudre le problème mentionné ci-dessus et d'améliorer l'interaction entre un utilisateur et un dispositif à reconnaissance gestuelle.

Pour cela, l'invention propose un procédé de reconnaissance gestuelle pour un système informatique selon la revendication 1.

Ainsi, lorsque l'utilisateur veut sélectionner une commande sur les moyens d'affichage, il déplace une partie de son corps, par exemple sa main, sur une position correspondant à la position de la commande voulue, par exemple une icône sur les moyens d'affichage, puis il effectue le geste spécifique pour sélectionner ladite commande. La position spécifique de sélection de la commande étant calculée en fonction de la trajectoire enregistrée de la partie de son corps, elle n'est pas perturbée pendant l'accomplissement du geste, et ne risque pas d'être modifiée. En effet, même si la partie du corps se déplace pendant l'accomplissement du geste, la position spécifique reste celle qui a été calculée.

Le procédé est remarquable en ce qu'il consiste à utiliser au moins une partie du corps d'un utilisateur du système pour, d'une part, déterminer au moins une position courante de la partie du corps et l'afficher sur les moyens d'affichage par un retour visuel, et d'autre part, de sélectionner ladite commande par un geste spécifique de la partie du corps, le procédé consistant à enregistrer la trajectoire de la partie du corps et, en cas de reconnaissance du geste spécifique, à calculer une position spécifique de sélection de la commande sur les moyens d'affichage en fonction de la trajectoire enregistrée.

Le procédé met en œuvre de façon automatique et répétitive les étapes successives suivantes :
∘ vérifier que le geste spécifique a débuté,
∘ si ce n'est pas le cas, afficher un retour visuel de la position courante de la partie du corps et enregistrer la trajectoire de la partie du corps à partir de ladite position courante,
∘ si c'est le cas, calculer la position spécifique de sélection en fonction de la trajectoire enregistrée, l'afficher sur les moyens d'affichage, et sélectionner la commande affichée sur la position spécifique.
   - la trajectoire enregistrée a une durée définie,
   - la position spécifique est calculée par une position moyenne sur la trajectoire enregistrée.

Selon différents modes de réalisation de l'invention qui pourront être pris ensembles ou séparément:
- la position spécifique est calculée par une position moyenne barycentrique sur la trajectoire enregistrée,
- la position spécifique est calculée par une position moyenne sur un intervalle de temps choisi de la trajectoire enregistrée,
- la partie du corps de l'utilisateur est une de ses mains,
- la position est représentée sur les moyens d'affichage par un curseur.

L'invention sera mieux comprise à la lumière de la description suivante qui n'est donnée qu'à titre indicatif et qui n'a pas pour but de la limiter, accompagnée des dessins joints :
- la figure 1 est une représentation schématique d'un dispositif de commande à reconnaissance gestuelle selon l'invention,
- la figure 2 est une représentation synoptique d'un mode de réalisation du fonctionnement des moyens de calculs et des moyens d'enregistrement selon l'invention.

Dans la description suivante, certaines commandes sont définies à titre d'exemple, et n'ont rien de limitatif pour l'invention. En effet, toutes les commandes possibles sur un écran peuvent être envisagées, telle la manipulation d'objets, ou l'utilisation de logiciels de dessins. Il en est de même de la main comme partie du corps d'un utilisateur, qui est choisie pour rendre la description plus claire, mais le contrôle gestuel est envisageable avec d'autres parties du corps, tels les yeux, les bras ou même le corps entier de l'utilisateur. En outre, la présence d'un curseur sur les moyens d'affichage n'est pas indispensable, une modification de l'aspect visuel de l'élément affiché peut suffire à servir de retour visuel, telle une surbrillance par exemple.

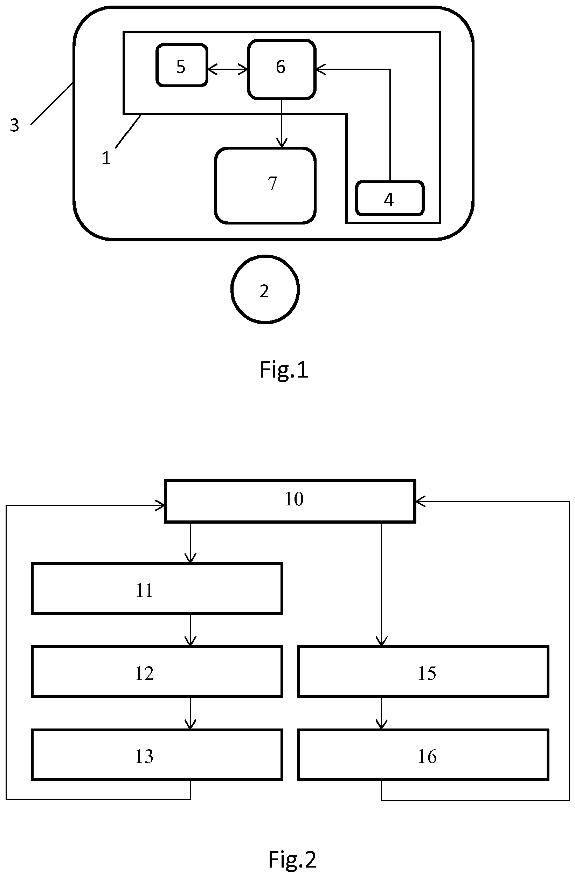

Sur la figure 1, est représenté un système informatique 3 muni de moyens d'affichage 7 et d'un dispositif de commande par reconnaissance gestuelle 1. Le système informatique 3 est par exemple un ordinateur avec un écran pour moyens d'affichage 7. Le système informatique 3 est configuré pour afficher sur l'écran des éléments, tels des icônes, des fichiers, des objets ou tout autre élément que l'on peut trouver habituellement sur un écran d'ordinateur. Le système informatique 3 est aussi configuré pour sélectionner les éléments affichés sur l'écran, et opérer une commande sur l'élément, à l'image de celles effectuées avec une souris lorsque l'on « clique » sur une icône pour ouvrir un fichier. A cette fin, une position sur l'écran est déterminée, la position étant représentée par un retour visuel, un curseur mobile par exemple, pour rendre l'utilisation du dispositif 1 de commande plus aisée.

Le procédé de commande à reconnaissance gestuelle selon l'invention est applicable à tout type de système informatique tels que les ordinateurs, les tablettes, les système de type « Smartphone », les téléviseurs, les écrans embarqués dans les véhicules automobiles permettant par exemple la commande de climatisation, radio, gps, ou encore les écrans à affichage virtuel sur le pare-brise, de type HUD (système d'affichage tête haute ou « Head-up display » en anglais).

Grâce au dispositif 1, la position du curseur et son déplacement sont contrôlés par une partie du corps d'un utilisateur 2, par exemple sa main, dont la trajectoire et la position dans l'espace déterminent la trajectoire et la position du curseur à l'écran. La sélection des commandes est aussi opérée par la main, au moyen d'un geste spécifique qui déclenche la sélection d'une commande, par exemple en ouvrant ou en fermant la main pour une sélection ou une désélection de type « clic » sur une souris usuelle. Le geste spécifique peut aussi déclencher directement l'exécution de la commande à la suite de la sélection.

A cette fin, le dispositif 1 comprend des moyens d'observation 4, par exemple une caméra orientée vers l'utilisateur 2, afin de fournir des images de l'utilisateur 2, et notamment de sa main. D'autres moyens d'observation 4 sont envisageables, tels que des détecteurs de mouvement. Les moyens d'observation transmettent les images à des moyens de calcul 6 configurés pour détecter la position de la main de l'utilisateur 2 dans l'espace, et déterminer sa trajectoire.

Les moyens de calcul 6 sont, de préférence, une unité de traitement d'images munie d'un logiciel de reconnaissance d'image. Ainsi, les moyens de calcul 6 sont aptes à reconnaître et à déterminer la position et la trajectoire de la main. Les moyens de calcul 6 sont aussi programmés pour calculer la position du curseur sur l'écran à partir de ces images. De manière similaire les moyens de calcul 6 sont prévus pour détecter le geste spécifique commandant la sélection d'une commande. Ainsi, si l'utilisateur 2 ferme la main alors que le curseur est positionné sur une icône, les moyens de calcul 6 déclenchent la sélection de cette icône pour ouvrir le fichier.

Les moyens de calcul 6 transmettent la position du curseur au reste du système informatique 3, ainsi que les ordres de sélection et de déclenchement de commandes lorsqu'ils sont détectés, afin que le système informatique 3 les exécute et les affiche à l'écran.

Pour éviter que le geste spécifique ne provoque une modification non désirée de la position du curseur, le dispositif 1 est configuré pour enregistrer la trajectoire de la main, notamment avant le début du geste spécifique.

Ainsi, en cas de détection du geste spécifique, le dispositif 1 fournit au reste du système informatique 3 une position précise du curseur où la commande doit être sélectionnée.

En effet intuitivement un utilisateur 10 va d'abord placer le curseur sur l'élément, avant de sélectionner une commande sur cet élément. Dans un système de commande à reconnaissance gestuelle, l'utilisateur 2 va dans un premier temps positionner sa main de façon à avoir le curseur au niveau d'un élément, avant d'effectuer un geste spécifique lié à la sélection d'une commande. Ainsi, grâce au dispositif 1 selon la divulgation, une position précise est calculée au moment de l'action, pour éviter que la position ne soit perturbée par l'exécution du geste.

Pour y parvenir, le dispositif 1 comprend des moyens d'enregistrement 5 d'au moins une trajectoire déterminée, par exemple une base de données, qui va servir à calculer ladite position qui est fournie par les moyens de calcul 6. La trajectoire enregistrée peut aussi bien être celle du curseur que celle de la main. Dans ce dernier cas, les moyens de calculs 6 devront calculer la position du curseur correspondante avant de la transmettre au reste du système informatique 3.

Lorsque le début du geste spécifique est détecté par les moyens de calcul 6 sur les images fournies par la caméra, les moyens de calcul 6 calculent une position à partir de la trajectoire enregistrée par les moyens d'enregistrement 5, et la transmettent au reste du système informatique 3 comme étant la position du curseur où est réalisée la sélection.

La figure 2 représente les étapes de procédé mises en œuvre par les moyens de calcul pour fournir la position du curseur au système informatique. La première étape 10 consiste à vérifier si un geste spécifique a débuté. L'étape suivante a deux possibilités.

La première possibilité est le cas où le geste spécifique n'a pas débuté. Les moyens de calcul déterminent alors à l'étape 11 une position et une trajectoire actualisée du curseur, en fonction d'une position éventuellement nouvelle de la main, puis à l'étape suivante 12, ils enregistrent la trajectoire du curseur ou de la main grâce aux moyens d'enregistrement. Enfin, ils transmettent à l'étape 13, la position actualisée du curseur au reste du système informatique 3, notamment à l'écran 7.

Pour la seconde possibilité, le geste spécifique est reconnu. A l'étape 15, les moyens de calcul 6 calculent la position spécifique de sélection sur l'écran à partir de la trajectoire enregistrée dans les moyens d'enregistrement 5, et la transmettent au reste du système informatique, notamment à l'écran 7. Et à l'étape 16, ils donnent l'ordre de sélectionner la commande affichée sur la position spécifique correspondant au geste spécifique.

Le procédé est avantageusement mis en œuvre de façon automatique et répétitive, de préférence toutes les 50ms. Cette durée favorise la précision du calcul de la position spécifique.

Les moyens de calcul recommencent le procédé à la première étape 10 de vérification dans les deux possibilités.

Dans un premier exemple non revendiqué, la position de la main ou de la souris est définie par la dernière position de la trajectoire enregistrée par les moyens d'enregistrement.

Selon l'invention, les moyens de calcul calculent une fonction, par exemple une position moyenne des positions de la main ou de la souris sur la trajectoire enregistrée. La trajectoire enregistrée a une durée définie, et la position moyenne est calculée sur un intervalle de temps, par exemple de 300 ou 500 ms. L'intervalle de temps peut être choisi sur une partie seulement de la trajectoire enregistrée, qui peut remonter plus loin dans le temps. Autrement dit, la position spécifique est calculée sur une moyenne des positions de la trajectoire, sur un intervalle de temps qui précède les dernières positions de la trajectoire enregistrée. Cette caractéristique permet d'éviter de prendre en compte dans le calcul de la position moyenne, les positions de la main lorsque le geste spécifique a débuté. En effet, l'utilisateur pourrait avoir déplacé sa main au moment de l'exécution du geste spécifique, ce qui aurait comme effet de déprécier le calcul.

La position moyenne est fournie au reste du système informatique, notamment à l'écran, en cas de sélection d'une commande.

Dans une variante de l'invention, la position calculée est une position moyenne barycentrique sur la trajectoire enregistrée. La moyenne barycentrique permet de donner plus de poids à certaines positions de la trajectoire enregistrée. Pour les mêmes raisons que dans la première variante du second mode de réalisation, l'importance des positions les plus récentes dans le temps peut ainsi être réduite par rapport aux positions précédentes de la trajectoire.

Les durées choisies favorisent un fonctionnement optimal du dispositif. Cependant d'autres durées peuvent être préférées, notamment en fonction de la durée des gestes spécifiques à effectuer.

## Revendications

1. Procédé de reconnaissance gestuelle pour un système informatique (3) muni de moyens d'affichage (7) aptes à afficher des commandes sélectionnables et de moyens d'observation (4) configurés pour fournir des images d'un utilisateur (2), le procédé consistant à utiliser au moins une partie du corps d'un utilisateur du système (3) pour, d'une part, déterminer au moins une position courante de la partie du corps et l'afficher sur les moyens d'affichage (7) par un retour visuel, et d'autre part, de sélectionner ladite commande par un geste spécifique de la partie du corps, le procédé consistant à enregistrer la trajectoire de la partie du corps et, en cas de reconnaissance du geste spécifique, à calculer une position spécifique de sélection de la commande sur les moyens d'affichage (7) en fonction de la trajectoire enregistrée, le procédé mettant en œuvre de façon automatique et répétitive les étapes successives suivantes :
- vérifier (10) que le geste spécifique a débuté,
- si ce n'est pas le cas, afficher (13) un retour visuel de la position courante de la partie du corps et enregistrer (12) la trajectoire de la partie du corps à partir de ladite position courante,
- si c'est le cas, calculer (15) la position spécifique de sélection en fonction de la trajectoire enregistrée, l'afficher sur les moyens d'affichage (7), et sélectionner (16) la commande affichée sur la position spécifique, ledit procédé étant **caractérisé en ce que**
la trajectoire enregistrée a une durée définie et la position spécifique est calculée par une position moyenne sur la trajectoire enregistrée.

2. Procédé selon la revendication 1, **caractérisé en ce que** la position spécifique est calculée par une position moyenne barycentrique sur la trajectoire enregistrée.

3. Procédé selon la revendication 1 à 2, **caractérisé en ce que** la position spécifique est calculée sur un intervalle de temps choisi de la trajectoire enregistrée.

4. Procédé selon l'une quelconque des revendications précédentes, dans lequel la partie du corps de l'utilisateur (2) est une de ses mains.

5. Procédé selon l'une quelconque des revendications précédentes, dans lequel la sélection de la commande déclenche l'exécution de ladite commande.

6. Procédé selon l'une quelconque des revendications précédentes, dans lequel le retour visuel affiché sur les moyens d'affichage (7) est un curseur.

## Patentansprüche

1. Verfahren zur Gestenerkennung für ein IT-System (3), das mit Anzeigeeinrichtungen (7), die auswählbare Steuerungen anzeigen können, und mit Beobachtungseinrichtungen (4) versehen ist, die konfiguriert sind, Bilder eines Benutzers (2) zu liefern,
wobei das Verfahren darin besteht, mindestens einen Teil des Körpers eines Benutzers des Systems (3) zu verwenden, um einerseits mindestens eine aktuelle Position des Teils des Körpers zu bestimmen und sie durch eine visuelle Rückmeldung auf den Anzeigeeinrichtungen (7) anzuzeigen, und andererseits die Steuerung durch eine spezifische Geste des Teils des Körpers auszuwählen, wobei das Verfahren darin besteht, den Weg des Teils des Körpers zu speichern und im Fall der Erkennung der spezifischen Geste eine spezifische Auswahlposition der Steuerung auf den Anzeigeeinrichtungen (7) abhängig vom gespeicherten Weg zu berechnen,
wobei das Verfahren automatisch und wiederholt die folgenden aufeinanderfolgenden Schritte durchführt:
- Überprüfen (10), dass die spezifische Geste angefangen hat,
- wenn dies nicht der Fall ist, Anzeigen (13) einer visuellen Rückmeldung der aktuellen Position des Teils des Körpers und Speichern (12) des Wegs des Teils des Körpers ausgehend von der aktuellen Position,
- wenn dies der Fall ist, Berechnen (15) der spezifischen Auswahlposition abhängig vom gespeicherten Weg, ihre Anzeige auf den Anzeigeeinrichtungen (7) und Auswahl (16) der an der spezifischen Position angezeigten Steuerung,
wobei das Verfahren **dadurch gekennzeichnet ist, dass** der gespeicherte Weg eine definierte Dauer hat und die spezifische Position durch eine mittlere Position auf dem gespeicherten Weg berechnet wird.

2. Verfahren nach Anspruch 1, **dadurch gekennzeichnet, dass** die spezifische Position durch eine mittlere baryzentrische Position auf dem gespeicherten Weg berechnet wird.

3. Verfahren nach Anspruch 1 bis 2, **dadurch gekennzeichnet, dass** die spezifische Position über einen ausgewählten Zeitraum des gespeicherten Wegs berechnet wird.

4. Verfahren nach einem der vorhergehenden Ansprüche, wobei der Teil des Körpers des Benutzers (2) eine seiner Hände ist.

5. Verfahren nach einem der vorhergehenden Ansprüche, wobei die Auswahl der Steuerung die Ausführung der Steuerung auslöst.

6. Verfahren nach einem der vorhergehenden Ansprüche, wobei die auf den Anzeigeeinrichtungen (7) angezeigte visuelle Rückmeldung ein Cursor ist.

## Claims

1. Gesture recognition method for a computer system (3) equipped with display means (7) able to display selectable commands and with observation means (4) configured so as to supply images of a user (2),
the method consisting in using at least one body part of a user of the system (3) in order firstly to determine at least one current position of the body part and display it on the display means (7) by way of visual feedback, and secondly to select said command by way of a specific gesture of the body part, the method consisting in recording the trajectory of the body part and, in the event of recognizing the specific gesture, in calculating a specific position for selecting the command on the display means (7) depending on the recorded trajectory, the method automatically and repetitively implementing the following successive steps:
- verifying (10) that the specific gesture has started,
- if this is not the case, displaying (13) visual feedback of the current position of the body part and recording (12) the trajectory of the body part starting from said current position,
- if this is the case, calculating (15) the specific selection position on the basis of the recorded trajectory, displaying it on the display means (7), and selecting (16) the command displayed at the specific position,
said method being **characterized in that** the recorded trajectory has a defined duration and the specific position is calculated by way of an average position on the recorded trajectory.

2. Method according to Claim 1, **characterized in that** the specific position is calculated by way of an average barycentric position on the recorded trajectory.

3. Method according to Claims 1 and 2, **characterized in that** the specific position is calculated over a chosen time interval of the recorded trajectory.

4. Method according to any one of the preceding claims, wherein the body part of the user (2) is one of his or her hands.

5. Method according to any one of the preceding claims, wherein the selection of the command triggers the execution of said command.

6. Method according to any one of the preceding claims, wherein the visual feedback displayed on the display means (7) is a cursor.
